# EUROPEAN PATENT SPECIFICATION

(11) **EP 3 216 646 B1**
(45) Date of publication and mention of the grant of the patent: **12.12.2018**
(21) Application number: 16159888.3
(22) Date of filing: 11.03.2016
(51) Int. Cl.: B60N 2/28, B60N 2/30, B60N 2/42

(54) **SIDE IMPACT PROTECTION DEVICE**
SEITENAUFPRALLSCHUTZVORRICHTUNG
DISPOSITIF DE PROTECTION CONTRE LES CHOCS LATÉRAUX

(43) Date of publication of application: 13.09.2017
(73) Proprietor: Volvo Car Corporation, 40 531 Göteborg (SE)
(72) Inventor: Myrholt, Helge, 43162 Mölndal (SE)
(74) Representative: Valea AB

(56) References cited:
- DE-A1- 10 258 245
- DE-A1-102012 013 451

## Description

### TECHNICAL FIELD

The present disclosure relates to a side impact protection device for a child sitting on a booster cushion in a vehicle seat. The disclosure further relates to an arrangement comprising at least one side impact protection device and the booster cushion and to a vehicle.

### BACKGROUND

When transporting a child in a vehicle, it is known to place the child on a booster cushion, which in turn is placed in a vehicle seat. Thereby, the seating position of the child is raised vertically, such that a safety belt of the vehicle will fit the child properly. A booster cushion may be used both in a front seat and in a rear seat, but it is often preferred to use the booster cushion in the rear seat.

The booster cushion may be a separate cushion which is to be placed in the vehicle seat. As an alternative, the booster cushion may be integrated in the vehicle seat, e.g. in the rear seat. The integrated booster cushion may assume an adult mode, wherein the rear seat is adapted to receive an adult or a large child. In addition, the integrated booster cushion may assume a child mode adapted to receive a child and therefore the seat is located vertically higher than for the adult mode. It is also known to have an integrated booster cushion, which may assume a third mode, a small child mode, wherein the booster cushion is located vertically higher than for the child mode. It would also be possible to have an integrated booster cushion, which may assume a plurality of different vertical positions.

Document DE 10 2012 013451 A1 discloses an integrated booster cushion. Further, an inflatable air bag element is provided in a rear seat. The airbag element forms a side flange and/or a headrest for a child seat in an inflated condition. A compressor is provided for inflating the air bag element.

The air bag element of DE 10 2012 013451 A1 could offer side impact protection for the child. However, the airbag element is integrated in the rear seat and can only be used together with the compressor. It would therefore be rather complicated, and hence expensive, to add such an airbag element to an existing vehicle, e.g. a vehicle with an existing integrated booster cushion.

Hence, there is a desire to provide an improved side impact protection device adapted for use together with a booster cushion.

### SUMMARY

The object of the present disclosure is to overcome or ameliorate at least one of the disadvantages of the prior art, or to provide a useful alternative.

The object above may be achieved by the subject-matter of claim 1. Embodiments are set forth in the appended dependent claims, in the following description and in the drawings.

Thus, according to the invention there is provided a side impact protection device for a child sitting on a booster cushion in a vehicle seat. The side impact protection device comprises a separate elongated body having a first end portion with a first fastening element and a second end portion with a second fastening element. The side impact protection device is adapted to be mounted in a vehicle by means of the first and second fastening elements and to extend along a backrest of the vehicle seat with the first end portion and the first fastening element at a first anchorage site at an upper end of the backrest and with the second end portion and the second fastening element at a second anchorage site at a lower end of the backrest.

The side impact protection device is utilized as a supplementary protection device. It is intended to be used together with a booster cushion. As mentioned above, the booster cushion may be a separate booster cushion, which is to be placed in the vehicle seat, or the booster cushion may be integrated in the vehicle seat. The side impact protection device and the booster cushion are suitable for use together with a safety belt of the vehicle. The booster cushion is positioned such that the same safety belt can be used in the child mode as in the adult mode. Due to the higher vertical position offered by the booster cushion, the safety belt will fit properly to the body of the occupant of the booster cushion, e.g. a child or an adult of slight build. The booster cushion may e.g. be suitable for use of occupants being in the range of from 90 cm to 150 cm.

The side impact protection device being a separate body means that it is not integrated in the vehicle seat. Hence, the side impact protection device as described herein may be used in existing vehicles, in particular existing vehicles with integrated booster cushions, but they would also be useful together with a separate non-integrated booster cushion Further, when not in use, the side impact protection device may be stored somewhere else, e.g. in the luggage compartment. Moreover, the side impact protection device may be moved between different vehicles.

The side impact protection device as described herein is adapted to be attached to the vehicle and/or to the vehicle seat by means of already existing anchorage sites located in the vehicle seat or the compartment of the vehicle, e.g. one or more anchorage sites adapted to attach a child seat for infants or small children. Alternatively, or additionally, the side impact protection device may be attached to another component of the vehicle seat or the vehicle body, such as a head rest or a body structure element. It is preferred that the attachment is strong enough to be able to withstand a force of a magnitude, which may arise in a collision involving the vehicle.

The first fastening element may be adapted to be attached to a top-tether anchorage site, which is comprised in or constitutes the first anchorage site. The top-tether anchorage site may be located at a trunk cover or at a rear side of the backrest of the vehicle seat. The top-tether anchorage site is further also suitable for providing an upper anchorage site for attaching a child seat for infants or small children. As an alternative, or a complement, the first anchorage site may be provided by the headrest of the vehicle seat.

The second fastening element may be adapted to be attached to an ISO fix anchorage site, which is comprised in or constitutes the second anchorage site. The ISO fix anchorage site is also suitable for providing a lower anchorage site for attaching a child seat for infants or small children.

The elongated body may comprise a padded portion adapted to extend all, or substantially all, the way between the first fastening element and the second fastening element. The padded portion may comprise a padded metal frame with trim. The padding may comprise a foamed plastic and/or be inflatable. The padded portion is preferably shaped and located such that it does not influence the function of the safety belt. It is preferred that the padded metal frame is strong enough to be able to withstand a force of a magnitude, which may arise in a collision involving the vehicle.

In order to facilitate storage when not in use, the side impact protection device, may be foldable in at least two parts. Further, if inflatable, the air may be possible to evacuate when the side impact protection device is to be stored away.

The side impact protection device may be provided with a safety belt guide helping to place the safety belt in a proper position in relation to the body of the occupant of the booster cushion. The safety guide may be provided in the padded portion. The safety guide may comprise a slot or an aperture in the padded portion.

The invention as described herein also relates to an arrangement comprising a booster cushion and at least one side impact protection device as described herein, preferably two side impact protection devices as described herein. Preferably, the booster cushion is adapted to be integrated in a vehicle seat. As mentioned above, the booster cushion may alternatively be a separate non-integrated booster cushion.

The arrangement may further comprise the vehicle seat with the booster cushion being integrated into the vehicle seat. The vehicle seat is preferably a rear seat. However, it would also be possible to use the integrated booster cushion with corresponding side impact protection device or devices in a passenger front seat. In addition, the booster cushion with corresponding side impact protection devices may be used in another vehicle, such as a bus, a tram or a train, and in a vessel, such as a ship or an aircraft.

The backrest of the vehicle seat may comprise the first anchorage site at or adjacent to the upper end of the backrest, the first anchorage site preferably comprising or being constituted by the top-tether anchorage site.

The vehicle seat may comprise the second anchorage site at or adjacent to the lower end of the backrest, the second anchorage site preferably comprising or being constituted by the ISO fix anchorage site.

The invention as described herein further relates to a vehicle comprising an arrangement as described herein.

### BRIEF DESCRIPTION OF THE DRAWINGS

The present invention will hereinafter be further explained by means of non-limiting examples with reference to the appended drawings wherein:
- Fig. 1: illustrates a perspective view of an integrated booster cushion of a rear seat of a vehicle in an adult mode,
- Fig. 2: illustrates an arrangement comprising the integrated booster cushion of Fig. 1 in a child mode together with two side impact protection devices according to the invention, and
- Fig. 3: illustrates a side view of the arrangement of Fig. 2.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, as defined by the appended claims. Details from two or more of the embodiments may be combined with each other.

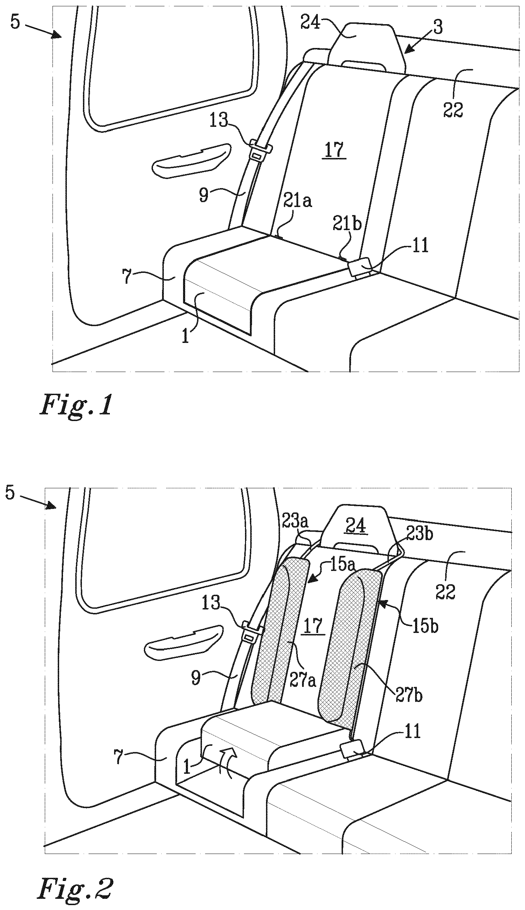

Figure 1 illustrates an integrated booster cushion 1 of a rear seat 3 of a vehicle 5. The integrated booster cushion 1 is in an adult mode, wherein the rear seat 3 is adapted to receive an adult or a large child. Thereby the integrated booster cushion 1 is flush or substantially flush with the rest of a squab 7 of the rear seat 3. There is further provided a safety belt 9, as commonly known in the art. A safety belt attachment 11 is arranged to receive a buckle 13 of the safety belt 9.

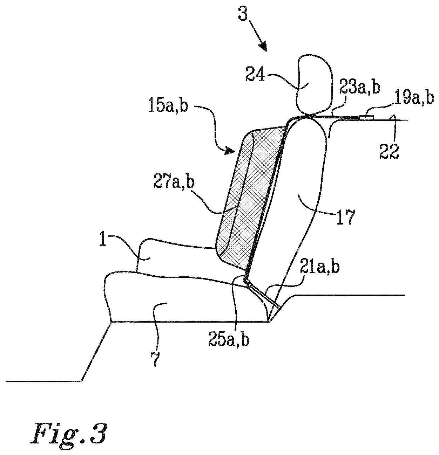

Figures 2 and 3 illustrate an integrated booster cushion 1 in a child mode, wherein the rear seat 3 is adapted to receive a child. Figure 2 shows a perspective view and Figure 3 shows a side view.

In the child mode of Figures 2 and 3, the integrated booster cushion 1 has been elevated to a vertically higher position than in the adult mode illustrated in Figure 1. The integrated booster cushion 1 is positioned such that the same safety belt 9 can be used in the child mode, as in the adult mode of Figure 1. Due to the higher vertical position, the safety belt 9 will fit properly to the body of the occupant of the booster cushion 1, e.g. a child or an adult of slight build. The child mode is suitable for use of occupants being in the range of from 90 cm to 150 cm.

Figure 2 further illustrates two side impact protection devices 15a, 15b according to the invention, which are to be positioned at either side of the occupant when seated on the integrated booster cushion 1. The side impact protection devices 15a, 15b form a respective separate elongated body, i.e. they are not integrated in the rear seat 3. Hence, the side impact protection device 15a, 15b according to the invention may be used in existing vehicles, in particular in existing vehicles with integrated booster cushions, but they would also be useful together with a separate non-integrated booster cushion. Further, when not in use, the side impact protection devices 15a, 15b may be stored somewhere else, e.g. in the luggage compartment of the vehicle 5. Moreover, the side impact protection devices 15a, 15b may be moved between different vehicles.

Each side impact protection devices 15a, 15b is adapted to extend along a backrest 17 of the rear seat 3 from a first anchorage site 19a, 19b at or adjacent to an upper end of the backrest 17 to a second anchorage site 21a, 21b at or adjacent to a lower end of the backrest 17. The first anchorage site 19a, 19b comprises or is constituted by a top-tether anchorage site, which is configured to provide an attachment for the side impact protection devices 15a, 15b being able to withstand a force of a magnitude, which may arise in a collision involving the vehicle 5. The top-tether anchorage site 19a, 19b may be located at a trunk cover 22, as illustrated in Figure 3, or at the rear side of the backrest 17 of the rear seat 3. The top-tether anchorage site 19a, 19b is further suitable for providing an upper anchorage site for attaching a child seat for infants or small children. As an alternative, or a complement, the first anchorage site 19a, 19b may be provided by a headrest 24 of the rear seat 3.

The second anchorage site 21a, 21b comprises or is constituted by an ISO fix anchorage site, which is suitable for providing a lower anchorage site for attaching a child seat for infants or small children. The second anchorage site 21a, 21b is configured to provide an attachment for the side impact protection devices 15a, 15b being able to withstand a force of a magnitude, which may arise in a collision involving the vehicle 5.

The side impact protection device 15a, 15b has a first end portion with a first fastening element 23a, 23b adapted to be attached to the first anchorage site 19a, 19b, in the illustrated embodiment the top-tether anchorage site. The first end portion forms the upper end portion when the side impact protection device 15a, 15b is mounted in the vehicle seat 3. The first fastening element 23a, 23b may comprise a strap with a hook at the end, or a strap adapted to form a loop around or through the first anchorage site 19a, 19b, e.g. by being connected to itself by a buckle. The first fastening element 23a, 23b may have an adjustable length.

The side impact protection device 15a, 15b further comprises a second end portion with a second fastening element 25a, 25b adapted to be attached to the second anchorage site 21a, 21b, in the illustrated embodiment, the respective ISO fix anchorage sites. The second end portion forms the lower end portion when the side impact protection device 15a, 15b is mounted in the vehicle seat 3. The second fastening element 25a, 25b may have an adjustable length. The second fastening element 25a, 25b is preferably configured to be strong enough to transfer an impact force arising in a collision situation to a body of the vehicle via the second anchorage site 21a, 21b. Hence, the second fastening element 25a, 25b may be rigid, e.g. made of metal.

Preferably, the first fastening element 23a, 23b and/or the second fastening element 25a, 25b is/are possible to tighten when the side impact protection device 15a, 15b is mounted in the vehicle seat 3 to reduce or avoid the risk that the side impact protection device 15a, 15b undesirably would move out of position in case of a side impact, e.g. a side collision.

The side impact protection device 15a, 15b comprises a padded portion 27a, 27b adapted to extend all, or substantially all, the way along the backrest 17 between the first anchorage site 19a, 19b and the second anchorage site 21a, 21b. The padded portion 27a, 27b may comprise a padded metal frame with trim. The padding may comprise a foamed plastic and/or be inflatable. The padded portion 27a, 27b is preferably shaped and located such that it does not influence the function of the safety belt 9. It is preferred that the padded metal frame is strong enough to be able to withstand a force of a magnitude, which may arise in a collision involving the vehicle 5.

In order to facilitate storage when not in use, the side impact protection devices 15a, 15b, may be foldable in at least two parts. Further, if inflatable, the air may be possible to evacuate when the side impact protection device 15a, 15b is to be stored away.

Preferably, the side impact protection device 15a, 15b as well as its first fastening element 23a, 23b and second fastening element 25a, 25b are shaped such that the usual safety belt 9 can be used by the occupant sitting on the booster cushion 1. The side impact protection device 15a, 15b may in addition be provided with a safety belt guide, not illustrated, helping to place the safety belt 9 in a proper position in relation to the body of the occupant of the booster cushion.

Although the illustrated embodiment discloses an integrated booster cushion 1 of a rear seat 3, it would also be possible to use the integrated booster cushion with corresponding side impact protection devices in a passenger front seat.

For an integrated booster cushion also having the above-mentioned small child mode or plurality of different positions, the side impact protection device may be used in that mode as well and/or in one or more of the different positions.

It would further be possible to use the side impact protection devices 15a, 15b according to the invention with a separate non-integrated booster cushion of a type commonly known in the art.

In addition, the booster cushion 1 with corresponding side impact protection devices 15a, 15b may be used in another vehicle, such as a bus, a tram or a train, and in a vessel, such as a ship or an aircraft.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A side impact protection device (15a, 15b) for a child sitting on a booster cushion (1) in a vehicle seat (3),
said side impact protection device (15a, 15b) comprising a separate elongated body having a first end portion with a first fastening element (23a, 23b) and a second end portion with a second fastening element (25a, 25b),
said side impact protection device (15a, 15b) being adapted to be mounted in a vehicle (5) by means of said first (23a, 23b) and second (25a, 25b) fastening elements and to extend along a backrest (17) of said vehicle seat (3) with said first end portion and said first fastening element (23a, 23b) at a first anchorage site (19a, 19b) at an upper end of said backrest (17) and with said second end portion and said second fastening element (25a, 25b) at a second anchorage site (21a, 21b) at a lower end of said backrest (17).

2. The side impact protection device (15a, 15b) according to claim 1, wherein said first fastening element (23a, 23b) is adapted to be attached to a top-tether anchorage site (19a, 19b), which is comprised in or constitutes said first anchorage site.

3. The side impact protection device (15a, 15b) according to claim 1 or 2 wherein said second fastening element (25a, 25b) is adapted to be attached to an ISO fix anchorage site (21a, 21b), which is comprised in or constitutes said second anchorage site.

4. The side impact protection device (15a, 15b) according to any one of the preceding claims, wherein said elongated body comprises a padded portion (27a, 27b) adapted to extend all, or substantially all, the way between said first fastening element (23a, 23b) and said second fastening element (25a, 25b).

5. The side impact protection device (15a, 15b) according to claim 4, wherein said padded portion (27a, 27b) comprises a padded metal frame with trim.

6. The side impact protection device (15a, 15b) according to any one of the preceding claims being foldable in at least two parts.

7. The side impact protection device (15a, 15b) according to any one of the preceding claims comprising a safety belt guide.

8. An arrangement comprising a booster cushion (1) and at least one side impact protection device (15a, 15b) according to any one of the preceding claims, preferably two side impact protection devices (15a, 15b) according to any one of the preceding claims, preferably said booster cushion (1) being adapted to be integrated in a vehicle seat (3).

9. The arrangement according to claim 8 further comprising said vehicle seat (3), said booster cushion (1) being integrated into said vehicle seat (3), said vehicle seat (3) preferably being a rear seat.

10. The arrangement according to claim 9, wherein said backrest (17) of said vehicle seat (3) comprises said first anchorage site (19a, 19b) at or adjacent to said upper end of said backrest (17), said first anchorage site (19a, 19b) preferably comprising or being constituted by said top-tether anchorage site.

11. The arrangement according to claim 9 or 10, wherein said vehicle seat (3) comprises said second anchorage site (21a, 21b) at or adjacent to said lower end of said backrest (17), said second anchorage site (21a, 21b) preferably comprising or being constituted by said ISO fix anchorage site.

12. A vehicle (5) comprising an arrangement according to any one of claims 8-11.

## Patentansprüche

1. Seitenaufprallschutzvorrichtung (15a, 15b) für ein auf einer Sitzerhöhung (1) in einem Fahrzeugsitz (3) sitzendes Kind,
wobei die Seitenaufprallschutzvorrichtung (15a, 15b) einen separaten längserstreckten Körper umfasst, der einen ersten Endabschnitt mit einem ersten Befestigungselement (23a, 23b) und einen zweiten Endabschnitt mit einem zweiten Befestigungselement (25a, 25b) umfasst,
wobei die Seitenaufprallschutzvorrichtung (15a, 15b) geeignet ist, mit Hilfe des ersten (23a, 23b) und des zweiten (25a, 25b) Befestigungselements in einem Fahrzeug (5) befestigt zu werden und sich entlang einer Rückenlehne (17) des Fahrzeugsitzes (3) zu erstrecken, wobei sich der erste Endabschnitt und das erste Befestigungselement (23a, 23b) an einer ersten Verankerungsstelle (19a, 19b) an einem oberen Ende der Rückenlehne (17) befinden und sich der zweite Endabschnitt und das zweite Befestigungselement (25a, 25b) an einer zweiten Verankerungsstelle (21a, 21b) an einem unteren Ende der Rückenlehne (17) befinden.

2. Seitenaufprallschutzvorrichtung (15a, 15b) nach Anspruch 1, wobei das erste Befestigungselement (23a, 23b) geeignet ist, an einer Verankerungsstelle (19a, 19b) am oberen Haltegurt, die in der ersten Verankerungsstelle umfasst ist oder diese bildet, angebracht zu werden.

3. Seitenaufprallschutzvorrichtung (15a, 15b) nach Anspruch 1 oder 2, wobei das zweite Befestigungselement (25a, 25b) geeignet ist, an einer Isofix-Verankerungsstelle (21a, 21b), die in der zweiten Verankerungsstelle umfasst ist oder diese bildet, angebracht zu werden.

4. Seitenaufprallschutzvorrichtung (15a, 15b) nach einem der vorhergehenden Ansprüche, wobei der längserstreckte Körper einen gepolsterten Abschnitt (27a, 27b) umfasst, der geeignet ist, sich über die gesamte oder im Wesentlichen die gesamte Strecke zwischen dem ersten Befestigungselement (23a, 23b) und dem zweiten Befestigungselement (25a, 25b) zu erstrecken.

5. Seitenaufprallschutzvorrichtung (15a, 15b) nach Anspruch 4, wobei der gepolsterte Abschnitt (27a, 27b) einen gepolsterten Metallrahmen mit Verkleidung umfasst.

6. Seitenaufprallschutzvorrichtung (15a, 15b) nach einem der vorhergehenden Ansprüche, die in wenigstens zwei Teile zusammengeklappt werden kann.

7. Seitenaufprallschutzvorrichtung (15a, 15b) nach einem der vorhergehenden Ansprüche, die eine Sicherheitsgurtführung umfasst.

8. Anordnung, die eine Sitzerhöhung (1) und wenigstens eine Seitenaufprallschutzvorrichtung (15a, 15b) nach einem der vorhergehenden Ansprüche, vorzugsweise zwei Seitenaufprallschutzvorrichtungen (15a, 15b) nach einem der vorhergehenden Ansprüche umfasst, wobei vorzugsweise die Sitzerhöhung (1) geeignet ist, in einen Fahrzeugsitz (3) integriert zu werden.

9. Anordnung nach Anspruch 8, die ferner den Fahrzeugsitz (3) umfasst, wobei die Sitzerhöhung (1) in dem Fahrzeugsitz (3) integriert ist und der Fahrzeugsitz (3) vorzugsweise ein Rücksitz ist.

10. Anordnung nach Anspruch 9, wobei die Rückenlehne (17) des Fahrzeugsitzes (3) die erste Verankerungsstelle (19a, 19b) an dem oberen Ende der Rückenlehne (17) oder angrenzend an dieses umfasst, wobei die erste Verankerungsstelle (19a, 19b) vorzugsweise in der Verankerungsstelle an dem oberen Haltegurt umfasst ist oder durch diese gebildet ist.

11. Anordnung nach Anspruch 9 oder 10, wobei der Fahrzeugsitz (3) die zweite Verankerungsstelle (21a, 21b) an dem unteren Ende der Rückenlehne (17) oder angrenzend an dieses umfasst, wobei die zweite Verankerungsstelle (21a, 21b) vorzugsweise in der Isofix-Verankerungsstelle umfasst ist oder durch diese gebildet ist.

12. Fahrzeug (5), das eine Anordnung nach einem der Ansprüche 8 bis 11 umfasst.

## Revendications

1. Dispositif de protection contre les chocs latéraux (15a, 15b) pour un enfant assis sur un coussin rehausseur (1) dans un siège de véhicule (3),
ledit dispositif de protection contre les chocs latéraux (15a, 15b) comprenant un corps allongé séparé ayant une première partie d'extrémité avec un premier élément de fixation (23a, 23b) et une seconde partie d'extrémité avec un second élément de fixation (25a, 25b),
ledit dispositif de protection contre les chocs latéraux (15a, 15b) étant conçu pour être monté dans un véhicule (5) au moyen desdits premier (23a, 23b) et second (25a, 25b) éléments de fixation et pour s'étendre le long d'un dossier (17) dudit siège de véhicule (3) avec ladite première partie d'extrémité et ledit premier élément de fixation (23a, 23b) à un premier site d'ancrage (19a, 19b) à une extrémité supérieure dudit dossier (17) et avec ladite seconde partie d'extrémité et ledit second élément de fixation (25a, 25b) à un second site d'ancrage (21a, 21b) à une extrémité inférieure dudit dossier (17).

2. Dispositif de protection contre les chocs latéraux (15a, 15b) selon la revendication 1, ledit premier élément de fixation (23a, 23b) étant conçu pour être fixé à un site d'ancrage supérieur (19a, 19b), qui est compris dans ou constitue ledit premier site d'ancrage.

3. Dispositif de protection contre les chocs latéraux (15a, 15b) selon la revendication 1 ou 2, ledit second élément de fixation (25a, 25b) étant conçu pour être fixé à un site d'ancrage Isofix (21a, 21b), qui est compris dans ou constitue ledit second site d'ancrage.

4. Dispositif de protection contre les chocs latéraux (15a, 15b) selon l'une quelconque des revendications précédentes, ledit corps allongé comprenant une partie rembourrée (27a, 27b) conçue pour s'étendre sur la totalité ou pratiquement la totalité du chemin entre ledit premier élément de fixation (23a, 23b) et ledit second élément de fixation (25a, 25b).

5. Dispositif de protection contre les chocs latéraux (15a, 15b) selon la revendication 4, ladite partie rembourrée (27a, 27b) comprenant un cadre métallique rembourré avec garniture.

6. Dispositif de protection contre les chocs latéraux (15a, 15b) selon l'une quelconque des revendications précédentes, pliable en au moins deux parties.

7. Dispositif de protection contre les chocs latéraux (15a, 15b) selon l'une quelconque des revendications précédentes, comprenant un guide de ceinture de sécurité.

8. Agencement comprenant un coussin rehausseur (1) et au moins un dispositif de protection contre les chocs latéraux (15a, 15b) selon l'une quelconque des revendications précédentes, de préférence deux dispositifs de protection contre les chocs latéraux (15a, 15b) selon l'une quelconque des revendications précédentes, de préférence ledit coussin rehausseur (1) étant conçu pour être intégré dans un siège de véhicule (3) .

9. Agencement selon la revendication 8 comprenant en outre ledit siège de véhicule (3), ledit coussin rehausseur (1) étant intégré dans ledit siège de véhicule (3), ledit siège de véhicule (3) étant de préférence un siège arrière.

10. Agencement selon la revendication 9, ledit dossier (17) dudit siège de véhicule (3) comprenant ledit premier site d'ancrage (19a, 19b) au niveau de ou adjacent à ladite extrémité supérieure dudit dossier (17), ledit premier site d'ancrage (19a, 19b) de préférence comprenant ou étant constitué par ledit site d'ancrage supérieur.

11. Agencement selon la revendication 9 ou 10, ledit siège de véhicule (3) comprenant ledit second site d'ancrage (21a, 21b) au niveau de ou adjacent à ladite extrémité inférieure dudit dossier (17), ledit second site d'ancrage (21a, 21b) de préférence comprenant ou étant constitué par ledit site d'ancrage Isofix.

12. Véhicule (5) comprenant un agencement selon l'une quelconque des revendications 8 à 11.
